# EUROPEAN PATENT SPECIFICATION

(11) **EP 2 357 284 B1**
(45) Date of publication and mention of the grant of the patent: **20.09.2017**
(21) Application number: 11154061.3
(22) Date of filing: 10.02.2011
(51) Int. Cl.: E02D 29/12, E03B 9/08, E03B 9/10, E03B 11/14, H02G 9/10, E02D 29/14

(54) **Well that can be buried for housing and protecting electro-hydraulic apparatuses**
Zum Schutz elektrohydraulischer Vorrichtungen versenkbarer Schacht
Puits pouvant être enterré pour recevoir et protéger des appareils électro-hydrauliques

(30) Priority: 15.02.2010 IT MI20100041 U
(43) Date of publication of application: 17.08.2011
(73) Proprietor: Rain S.p.A., 20122 Milano (IT)
(72) Inventor: Stiatti, Matteo Maria, 20154 Milano (IT); Stiatti, Alberto, 20145 Milano (IT); Stiatti, Anna, 20145 Milano (IT)
(74) Representative: Ottazzo, Marco Francesco Agostino

(56) References cited:
- EP-A1- 1 327 720
- EP-A1- 1 959 062
- DE-A1- 3 400 576
- DE-B3-102004 053 056
- DE-C1- 4 223 229
- FR-A1- 2 693 320
- FR-A1- 2 883 371
- GB-A- 1 484 141
- GB-A- 2 156 882
- JP-A- 2009 102 822
- US-A- 4 872 575
- US-A- 5 353 206
- US-A- 5 773 756

## Description

The present invention refers to a well that can be buried for housing and protecting electro-hydraulic apparatuses, in particular for electric and hydraulic apparatuses of irrigation systems.

In order to house solenoid valves, taps, hydrants and other apparatuses of an irrigation system that need to be buried, it is known to use wells having the purpose of allowing access to such apparatuses and of protecting them from the ground and from debris. Such wells normally comprise a main body for housing the apparatuses, which has one or more lower openings, to allow the electric and hydraulic supply ducts of the apparatuses themselves to pass, and an upper opening, closed by a cover that can be walked upon and opened for inspection and maintenance operations. Known types of wells are built in various shapes and sizes, according to the number and the size of the apparatuses that they are intended to house, and they are usually obtained by forming of thermoplastic materials in a mould, since such materials are insensitive to corrosive phenomena due to burying.

Normally, in known wells, in order to be able to lift the cover and carry out an inspection on the apparatuses it is necessary to be able to have a suitable tool or, alternatively, to act manually using a hole usually foreseen on the cover itself. Such a hole, however, as well as making it difficult to open the cover, can also cause debris and dirt of various types to fall inside the well. In addition, in most known well covers there is no means suitable for preventing the cover from opening unintentionally.

Another drawback of known wells is due to the fact that, inside them, the apparatuses do not have the possibility of being arranged in an ordered manner, thus making difficult to identify them for example in the case of maintenance.

Document FR 2 693 320 A1 discloses a waterproof housing that can be buried for protecting electrical installations according to the preamble of claim 1, wherein the cover is neither provided with means that facilitate the opening, nor provided with means that, in combination with the means that facilitate the opening, prevent the cover from being unintentionally opened.

Document EP 1 327 720 A1 discloses a manhole cover for wastewater wells wherein a hinged handle is provided to facilitate the opening. However, no means that prevents the cover from being unintentionally opened is provided.

Document GB 2 156 882 A discloses a manhole cover for road and pavement openings for sewers, drains, wiring pits and conduits. No means that facilitate the opening of the cover is provided.

Document EP 1 959 062 A1 discloses a structure of waste water well wherein a cover of conventional type is provided. The cover is neither provided with means that facilitate the opening, nor provided with means that prevent the cover from being unintentionally opened.

Other wells for electro-hydraulic apparatuses and/or covers for closing such type of wells are disclosed, for example, in documents DE 42 23 229 C1, US 5 353 206 A, DE 10 2004 053056 B3, US 5 773 756 A, DE 34 00 576 A1, FR 2 883 371 A1, GB 1 484 141 A, JP 2009 102822 A and US 4 872 575 A.

The general purpose of the present invention is therefore to solve the aforementioned drawbacks of the prior art in a simple, cost-effective and particularly functional manner.

In particular, a purpose of the present invention is to make a well that can be buried for housing and protecting electro-hydraulic apparatuses, in particular for electric and hydraulic apparatuses of irrigation systems, which is simple to open whenever it is necessary to inspect its content.

Another purpose of the invention is to make a well that can be buried for housing and protecting electro-hydraulic apparatuses in which it is not possible, or in any case it is made particularly difficult, to open the relative cover without wanting to.

A further purpose of the invention is to make a well that can be buried for housing and protecting electro-hydraulic apparatuses in which it is possible to house such apparatuses in a rational and ordered manner.

These purposes according to the present invention are accomplished by making a well that can be buried for housing and protecting electro-hydraulic apparatuses, in particular for electric and hydraulic apparatuses of irrigation systems, as outlined in claim 1.

Further characteristics of the invention are highlighted by the dependent claims, which are an integral part of the present description.

The characteristics and advantages of a well that can be buried for housing and protecting electro-hydraulic apparatuses according to the present invention will become clearer from the following description, given as an example and not for limiting purposes, referring to the attached schematic drawings, in which:
figure 1 is a perspective view of a first example embodiment of a well that can be buried for housing and protecting electro-hydraulic apparatuses according to the present invention, shown in closed configuration;

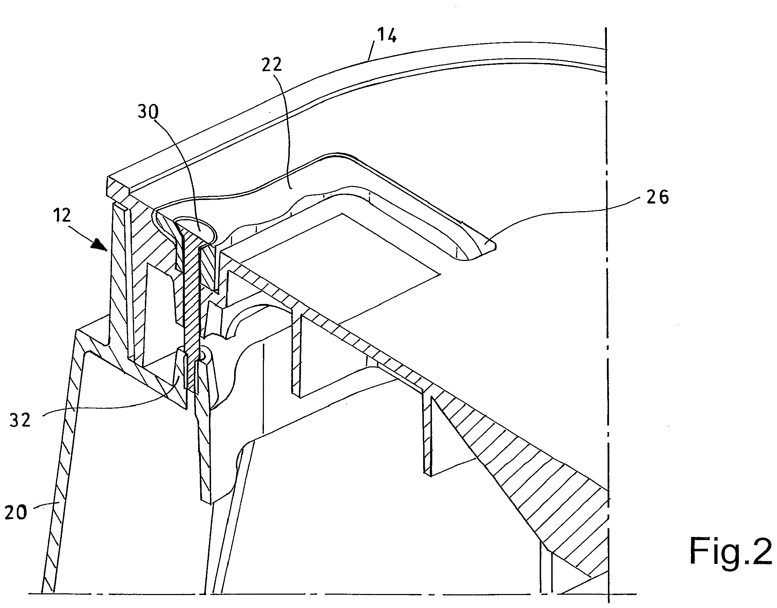

figure 2 is a section view of some components of the well of figure 1;

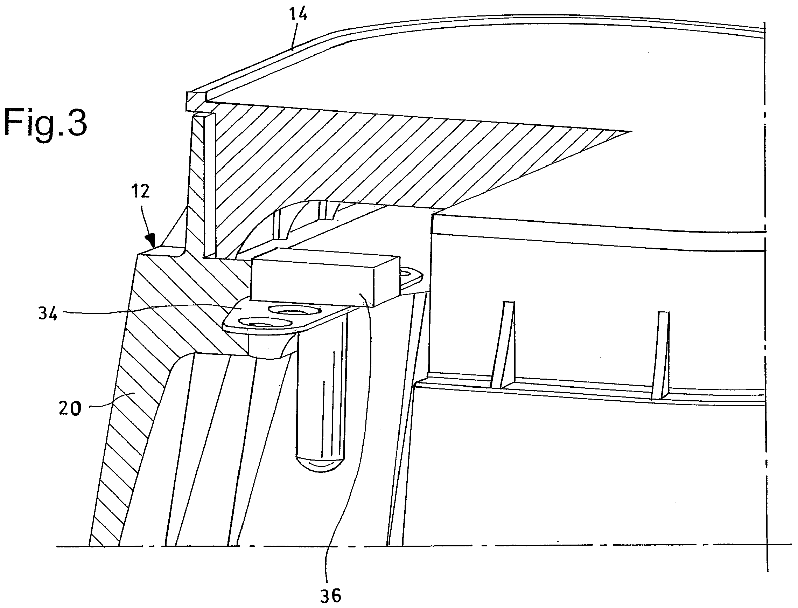

figure 3 is another section view of further components of the well of figure 1;

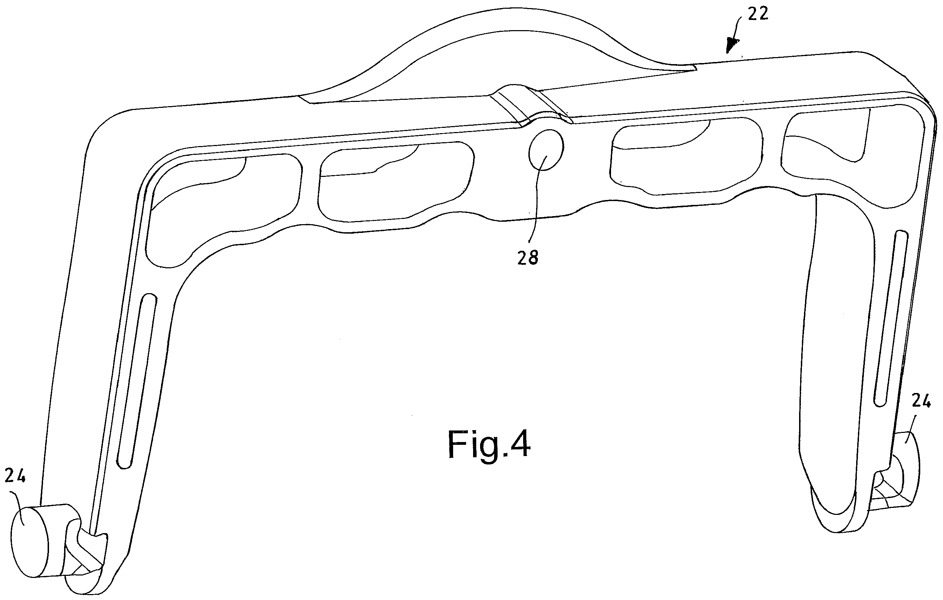

figure 4 is an enlarged perspective view of one of the components of the well of figure 1;
figure 5 is a perspective view of a second example embodiment of a well that can be buried for housing and protecting electro-hydraulic apparatuses according to the present invention, shown in closed configuration; and

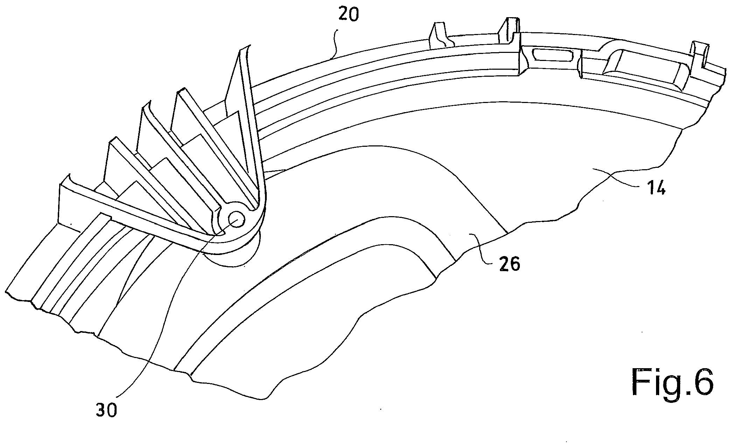

figure 6 is a bottom enlarged view of one of the components of the well of figure 5.

With reference to the figures, two separate example embodiments of a well that can be buried for housing and protecting electro-hydraulic apparatuses according to the present invention are shown, wholly indicated with reference numeral 10.

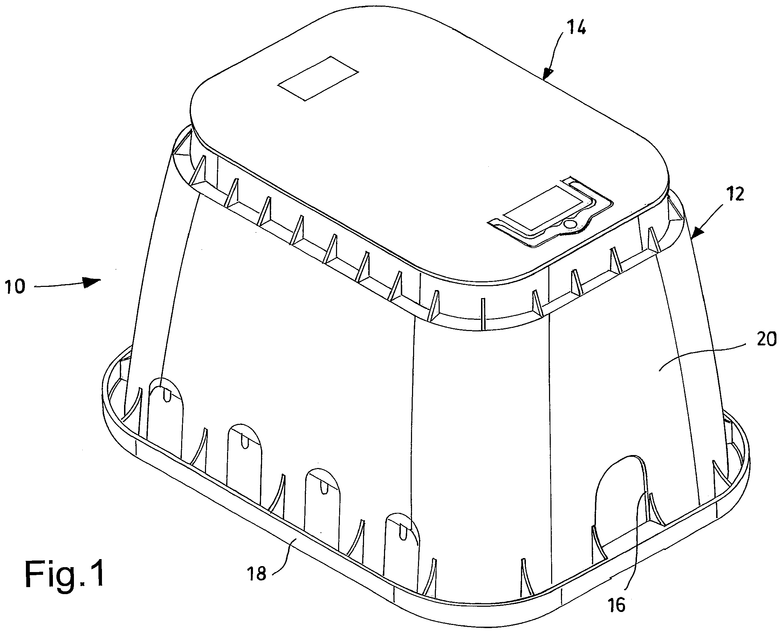

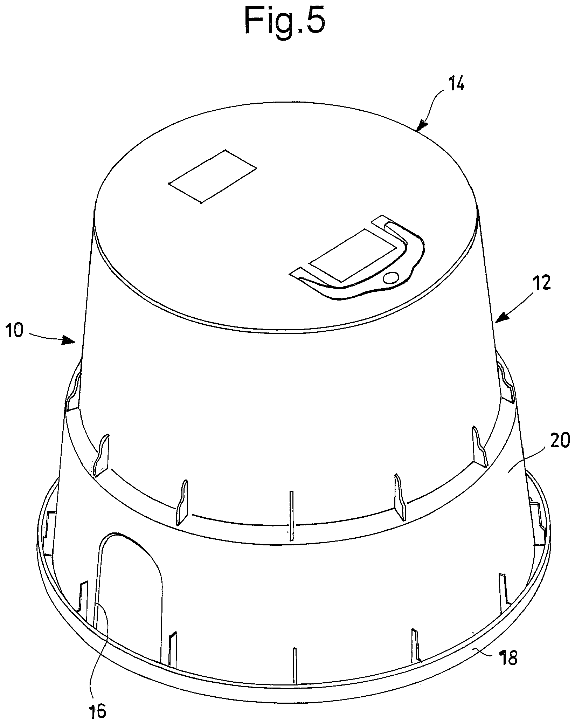

The well 10 comprises a main body 12 for housing the apparatuses and a cover 14, applied onto an upper opening of such a main body 12. The main body 12 can also be provided with one or more further openings 16, foreseen on the base 18 and/or on one or more of the side walls 20 of the main body 12 itself, to allow the electric and/or hydraulic supply ducts of the apparatuses contained inside the well 10 to pass. Both the main body 12 and the cover 14 are preferably made through forming of thermoplastic materials in a mould, although it is not ruled out the use of other suitable materials according to the intended use of the well 10. The base 18 of the main body 12 preferably have a larger surface than that of the cover 14 so that, when buried, the well 10 is particularly stable, effectively opposing any possible attempt of extraction from the ground. The main body 12 of the well 10 can thus be shaped, based on the preferred example embodiments shown in the figures, as a truncated pyramid (figure 1) or truncated cone (figure 5).

On the cover 14 there is at least one lifting handle 22 capable of making it easier to open and close the cover 14 itself to carry out maintenance operations on the apparatuses contained in the main body 12 of the well 10. In detail, the lifting handle 22 is of the type provided with side hinging pins 24, so as to be rotatably connected to the cover 14 and pass from an operative position, in which such a lifting handle 22 is raised with respect to the cover 14 so as to be able to be gripped by a worker, to an inoperative position, in which such a lifting handle 22 is folded onto the cover 14 inside a suitably shaped cavity 26. Consequently, in its inoperative position, the lifting handle 22 is completely "embedded" in the cover 14, thus not constituting an obstacle in any way to the passage of people or vehicle above the well 10 and not foreseeing the presence of any through hole on the cover 14 itself, which could cause undesired material to enter inside the well 10.

The lifting handle 22 can thus be provided with a through hole 28 in which a tamper-proof bolt 30 is inserted that engages on the main body 12, inside a corresponding blind hole 32 foreseen on one of the side 7 walls 20 of the main body 12 itself, when the lifting handle 22 is in an inoperative position. In this way, the lifting handle 22 is prevented from passing from the inoperative position to the operative position, stably fixing the cover 14 to the main body 12 unless one possesses the tool suitable for unlocking the tamper-proof bolt 30. The lifting handle 22, as well as the main body 12 and the cover 14 of the well 10, is also preferably made through forming of thermoplastic materials in a mould.

On one or more of the side walls 20 of the main body 12 there are also, formed in a single piece with such side walls 20, one or more housings 34 on each of which a support 36 can be inserted that is used to support the components of the apparatuses housed inside the well 10. In detail, the supports 36 are preferably intended to support the sealed connectors of the irrigation solenoid valves contained in the well 10. In irrigation systems, indeed, each solenoid valve is connected by cable to a suitable control unit, of course located outside of the well 10. The solenoid of each solenoid valve is equipped with two cables, in general 50 cm long, which must therefore be joined with other cables that are connected to the control unit. The advantage of having the sealed connectors of the irrigation solenoid valves arranged in order on the main body 12 of the well 10 is substantial since, in the case of maintenance, it is possible to immediately see which cable connects to which solenoid valve. Since in known wells the cables lie on the ground, it is often not easy to identify which cable corresponds to which solenoid valve.

The housings 34 and the relative supports 36 can also be used to "hang" the battery powered controller of the irrigation system, which is normally housed inside the well 10, thus avoiding such a battery powered controller lying on the base 18 of the main body 12 of the well 10 itself and, therefore, remaining in contact with the ground that can often be flooded.

It has thus been seen that the well that can be buried for housing and protecting electro-hydraulic apparatuses according to the present invention achieves the purposes highlighted earlier.

The well that can be buried for housing and protecting electro-hydraulic apparatuses of the present invention thus conceived can in any case undergo numerous modifications and variants, all of which are covered by the same innovative concept; moreover, all of the details can be replaced with technically equivalent elements, whilst the shapes and sizes can be whatever according to the technical requirements.

The scope of protection is therefore defined by the attached claims.

## Claims

1. Well (10) that can be buried for housing and protecting electro-hydraulic apparatuses, in particular for electric and hydraulic apparatuses of irrigation systems, comprising a main body (12) for housing the apparatuses and a cover (14), applied onto an upper opening of said main body (12), the main body (12) also being provided with one or more further openings (16), foreseen on the base (18) and/or on one or more of the side walls (20) of said main body (12), to allow electric and/or hydraulic supply ducts of the apparatuses to pass, whereby on the cover (14) there is at least one lifting handle (22) capable of making it easier to open and close said cover (14) to carry out maintenance operations on the apparatuses contained in the main body (12) of the well (10), **characterised by** said lifting handle (22) being provided with side hinging pins (24), so as to be rotatably connected to the cover (14) and to pass from an operative position, in which said lifting handle (22) is raised with respect to the cover (14) in order to be able to be gripped by a worker, to an inoperative position, in which said lifting handle (22) is folded onto the cover (14) inside a suitably shaped cavity (26), said lifting handle (22) being furthermore provided with a through hole (28) in which a tamper-proof bolt (30) is inserted that engages on the main body (12), inside a corresponding blind hole (32) provided on one of the side walls (20) of said main body (12), when the lifting handle (22) is in the inoperative position.

2. Well (10) according to claim 1, **characterised in that** on one or more of the side walls (20) of the main body (12) one or more housings (34) are formed, on each of which a support (36) can be inserted that is used to support the components of the apparatuses housed inside the well (10).

3. Well (10) according to claim 2, **characterised in that** said one or more housings (34) are formed in a single piece with the side walls (20) of the well (10).

4. Well (10) according to any one of the previous claims, **characterised in that** the base (18) of the main body (12) has a larger surface than that of the cover (14) so that, when buried, the well (10) is particularly stable, effectively opposing any possible attempt of extraction from the ground.

5. Well (10) according to claim 4, **characterized in that** the main body (12) is shaped as a truncated pyramid.

6. Well (10) according to claim 4, **characterized in that** the main body (12) is shaped as a truncated cone.

7. Well (10) according to any one of the previous claims, **characterised in that** both the main body (12) and the cover (14) are made through forming of thermoplastic materials in a mould.

8. Well (10) according to claim 7, **characterised in that** the lifting handle (22) is made through forming of thermoplastic materials in a mould.

## Patentansprüche

1. Versenkbarer Schacht (10) zur Aufnahme und zum Schutz elektrohydraulischer Vorrichtungen, insbesondere elektrohydraulischer Vorrichtungen von Bewässerungssystemen, umfassend einen Hauptkörper (12) zur Aufnahme der Vorrichtungen und einen Deckel (14), der auf eine obere Öffnung des Hauptkörpers (12) aufgesetzt wird, wobei der Hauptkörper (12) außerdem mit einer oder mehreren weiteren Öffnungen (16) versehen ist, die auf der Basis (18) und/oder auf einer oder mehreren der Seitenwände (20) des Hauptkörpers (12) vorgesehen sind, um es elektrischen und/oder hydraulischen Versorgungskanälen der Vorrichtungen zu erlauben, hindurchgeführt zu werden, wobei auf dem Deckel (14) wenigstens ein Hebegriff (22) vorgesehen ist, der in der Lage ist, das Öffnen und Schließen des Deckels (14) zum Ausführen von Wartungsarbeiten an den in dem Hauptkörper (12) des Schachts (10) enthaltenen Vorrichtungen zu erleichtern, **dadurch gekennzeichnet, dass** der Hebegriff (22) mit Seitenscharnierstiften (24) versehen ist, um drehbar mit dem Deckel (14) verbunden zu sein und von einer Betriebsposition, in der der Hebegriff (22) in Bezug auf den Deckel (14) angehoben wird, um von einem Arbeiter ergriffen werden zu können, in eine Außerbetriebsposition überzugehen, in der der Hebegriff (22) auf dem Deckel (14) in einen geeignet geformten Hohlraum (26) eingeklappt wird, wobei der Hebegriff (22) des Weiteren mit einer durchgehenden Bohrung (28) versehen ist, in der eine manipulationssichere Schraube (30) eingesetzt ist, die den Hauptkörper (12) in einem entsprechenden Blindloch (32) in Eingriff nimmt, das auf einer der Seitenwände (20) des Hauptkörpers (12) vorgesehen ist, wenn der Hebegriff (22) sich in der Außerbetriebsposition befindet.

2. Schacht (10) nach Anspruch 1, **dadurch gekennzeichnet, dass** auf einer oder mehreren der Seitenwände (20) des Hauptkörpers (12) ein oder mehrere Gehäuse (34) ausgebildet sind, in die jeweils eine Stütze (36) eingefügt werden kann, die zum Stützen der Bestandteile der in dem Schacht (10) untergebrachten Vorrichtungen verwendet wird.

3. Schacht (10) nach Anspruch 2, **dadurch gekennzeichnet, dass** das eine oder die mehreren Gehäuse (34) einstückig mit den Seitenwänden (20) des Schachts (10) ausgebildet sind.

4. Schacht (10) nach einem der vorstehenden Ansprüche, **dadurch gekennzeichnet, dass** die Basis (18) des Hauptkörpers (12) eine größere Oberfläche als der Deckel (14) aufweist, so dass der Schacht (10), wenn er versenkt wird, besonders stabil ist und jedem Versuch eines Herausnehmens aus dem Boden auf wirksame Weise widersteht.

5. Schacht (10) nach Anspruch 4, **dadurch gekennzeichnet, dass** der Hauptkörper (12) als ein Pyramidenstumpf geformt ist.

6. Schacht (10) nach Anspruch 4, **dadurch gekennzeichnet, dass** der Hauptkörper (12) als ein Kegelstumpf geformt ist.

7. Schacht (10) nach einem der vorstehenden Ansprüche, **dadurch gekennzeichnet, dass** der Hauptkörper (12) und der Deckel (14) durch Formen thermoplastischer Materialien in einer Form hergestellt sind.

8. Schacht (10) nach Anspruch 7, **dadurch gekennzeichnet, dass** der Hebegriff (22) durch Formen thermoplastischer Materialien in einer Form hergestellt ist.

## Revendications

1. Puits (10) qui peut être enterré pour loger et protéger des appareils électrohydrauliques, en particulier pour des appareils électriques et hydrauliques de systèmes d'irrigation, comprenant un corps principal (12) pour le logement des appareils et un couvercle (14), appliqué sur une ouverture supérieure dudit corps principal (12), le corps principal (12) étant aussi pourvu d'une ou plusieurs autres ouvertures (16), prévues sur la base (18) et/ou sur une ou plusieurs des parois latérales (20) dudit corps principal (12), pour permettre le passage de conduites d'alimentation électriques et/ou hydrauliques des appareils, dans lequel sur le couvercle (14) il y a au moins une poignée de levage (22) qui facilite l'ouverture et la fermeture du couvercle (14) pour effectuer des opérations de maintenance sur les appareils contenus dans le corps principal (12) du puits (10), **caractérisé en ce que** ladite poignée de levage (22) est munie de pivots de charnière latéraux (24), de manière à être reliée par rotation au couvercle (14) et de passer d'une position opérationnelle, dans laquelle ladite poignée de levage (22) est soulevée par rapport au couvercle (14) pour pouvoir être saisie par un employé, à une position non opérationnelle, dans laquelle ladite poignée de levage (22) est repliée sur le couvercle (14) à l'intérieur d'une cavité (26) formée de manière appropriée, ladite poignée de levage (22) étant en outre munie d'un trou passant (28) dans lequel un boulon inviolable (30) est inséré qui s'engage sur le corps principal (12), à l'intérieur d'un trou borgne correspondant (32) fourni sur l'une des parois latérales (20) dudit corps principal (12), lorsque la poignée de levage (22) est dans la position non opérationnelle.

2. Puits (10) selon la revendication 1, **caractérisé en ce que** sur une ou plusieurs des parois latérales (20) du corps principal (12) un ou plusieurs logements (34) sont formés, sur chacun desquels un support (36) peut être inséré qui est utilisé pour soutenir les composants des appareils logés à l'intérieur du puits (10).

3. Puits (10) selon la revendication 2, **caractérisé en ce que** lesdits un ou plusieurs logements (34) forment une seule pièce avec les parois latérales (20) du puits (10).

4. Puits (10) selon l'une quelconque des revendications précédentes, **caractérisé en ce que** la base (18) du corps principal (12) a une surface plus grande que celle du couvercle (14) de manière à ce que, une fois enterré, le puits (10) soit particulièrement stable, empêchant efficacement toute tentative d'extraction éventuelle du sol.

5. Puits (10) selon la revendication 4, **caractérisé en ce que** le corps principal (12) a la forme d'une pyramide tronquée.

6. Puits (10) selon la revendication 4, **caractérisé en ce que** le corps principal (12) a la forme d'un cône tronqué.

7. Puits (10) selon l'une quelconque des revendications précédentes, **caractérisé en ce que** le corps principal (12) et le couvercle (14) sont réalisés par la mise en forme des matériaux thermoplastiques dans un moule.

8. Puits (10) selon la revendication 7, **caractérisé en ce que** la poignée de levage (22) est réalisée par la mise en forme des matériaux thermoplastiques dans un moule.
